# EUROPEAN PATENT SPECIFICATION

(11) **EP 0 479 445 B1**
(45) Date of publication and mention of the grant of the patent: **11.03.1998**
(21) Application number: 91308423.2
(22) Date of filing: 16.09.1991
(51) Int. Cl.: C08G 59/50, C08G 59/64, C08G 73/02

(54) **Hydroxyl functionalized polyetheramines as barrier packaging for oxygen-sensitive materials**
Hydroxy-funktionalisierte Polyetheramine zur Verwendung als Sperrschicht bei sauerstoffempfindlichen Materialien
Polyétheramines à fonctions hydroxyl utilisées comme couche barrière pour des matériaux sensibles à l'oxygéne

(30) Priority: 03.10.1990 US 592097
(43) Date of publication of application: 08.04.1992
(73) Proprietor: THE DOW CHEMICAL COMPANY, Midland, Michigan 48674 (US)
(72) Inventor: Silvis, H. Craig, Midland, Michigan 48640 (US); White, Jerry E., Midland, Michigan 48640 (US)
(74) Representative: Raynor, John

(56) References cited:
- EP-A- 0 249 263
- EP-A- 0 327 038
- US-A- 3 554 956
- US-A- 4 308 085
- US-A- 4 612 156

## Description

This invention relates to thermoplastic polyethers having pendant hydroxyl moieties and to methods of using them as barrier articles to protect oxygen-sensitive materials.

Hydroxyphenoxyether polymers are known to be useful in the fabrication of articles exhibiting barrier properties. See, for example, Reinking et al, *J. Poly. Sci.,* Vol. 7, pp. 2135-2144, pp. 2145-2152 and pp. 2153-2160 (1963) and *Encyclopedia of Polymer Science and Technology,* Vol. 10, pp. 111-122. Such polymers generally have only moderate oxygen barrier, i.e., they generally exhibit oxygen transmission rates of 2 to 75 cm³-mil/100 in²-atm-day [9 to 337.5 x 10⁻⁸cc.mm/(m².s.kPa)].

EP-A-327038 provides ungelled thermoplastic resins which are the reaction products of polyamines and polyepoxides. However, these resins have a low molecular weight and cannot therefore be formed into stand-alone products. Rather, they must be combined with at least one layer of a gas-permeable polymeric material, which reduces the barrier properties of products made from the resins. In addition, cross-linking occurs due to the presence of residual unreacted epoxide groups, which results in a thermoset resin which cannot easily be fabricated.

In view of the limited barrier properties of the prior art polymers having pendant hydroxyl moieties and phenoxyether moieties, it would be highly desirable to provide a polymer having a high barrier (i.e., oxygen transmission rate less than 5 cm³-mil/100 in²-atm-day [2.25 x 10⁻⁷cc.mm/(m².s.kPa)] to oxygen. Polymers that retain such high barrier in both dry and moist environments would be especially desirable.

The present invention is, in one aspect, a moldable thermoplastic polyetheramine, having repeating units represented by the formula: 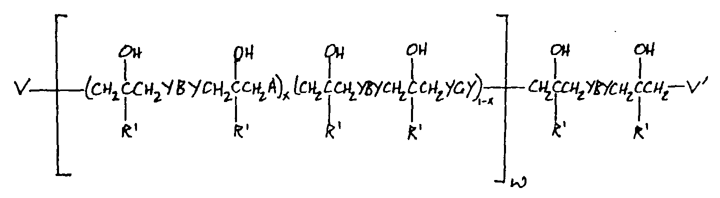 wherein each A independently is piperazine, a substituted piperazine, or a group of the formula: 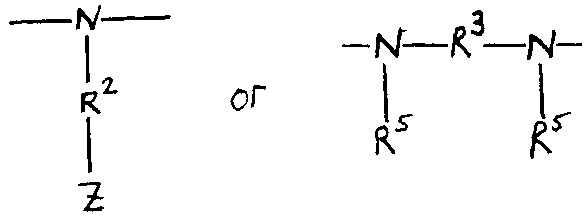 in which
R² is a C₂-C₁₀ hydrocarbylene or substituted hydrocarbylene and Z is a C₁-C₁₀ hydrocarbylamido, or R² is a C₁-C₁₀ alkylene or substituted C₁-C₁₀ alkylene or phenyl or substituted phenyl and Z is alkoxy, hydroxyalkyl or alkylamino, provided that if R² is phenyl or substituted phenyl then hydroxyalkyl is hydroxymethyl. Preferably, the substituent(s) is hydroxymethyl, alkylamido, alkoxy, halo, cyano, amino including alkylamino and dialkyl amino, aryloxy, alkylcarbonyl, and arylcarbonyl, with hydroxymethyl and alkylamido being most preferred. Z is preferably methylamido, hydroxyethyl or hydroxypropyl;
R³ is a C₁-C₁₀ hydrocarbylene or a substituted hydrocarbylene, and, preferably, the substituent(s) is alkyl, alkoxy, hydroxymethyl, alkylamido, hydroxyphenyl, and alkoxyphenyl, with ethyl and p-xylyl being most preferred;
each R⁵ independently is a C₁-C₁₀ alkyl or substituted C₁-C₁₀ alkyl or phenyl or substituted phenyl, wherein the substituent is hydroxy, hydroxymethyl or alkylamido, with hydroxymethyl and alkylamido being most preferred;
each G and B independently is a divalent aromatic moiety and preferably each independently is carbonyldiphenylene, m-phenylene, p-phenylene, sulfonyldiphenylene, p-phenylene, isopropylidenediphenylene, biphenylene, biphenylene oxide, methylenediphenylene, biphenylene sulfide, naphthylene, biphenylenecyanomethane, 3,3'-dialkyldiphenyleneisopropylidene, 3,3',4,4'-tetraalkyldiphenyleneisopropylidene or the corresponding alkyl-substituted derivatives of the above named divalent aromatic moieties wherein the substituent(s) is a monovalent moiety which is inert in the reactions used to prepare the polyetheramine. Most preferably, B is isopropylidenediphenylene or biphenylene;
each Y independently is divalent sulfur or (preferably) oxygen;
R¹ is hydrogen, a monovalent hydrocarbon or substituted monovalent hydrocarbon and preferably R¹ is hydrogen or methyl;
each of V and V' independently is a secondary amine or a tertiary amine and, preferably, each V and V' independently is a secondary amine such as 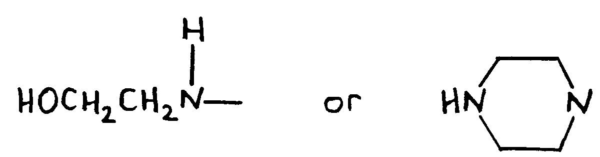 or a tertiary amine such as 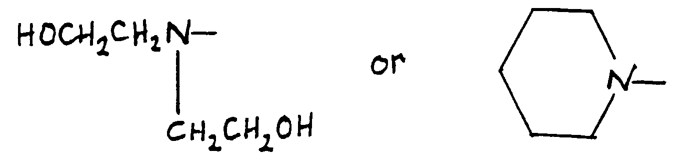
w is a whole number from 10 to 400; and
x is a number sufficiently high that the oxygen transmission rate of the polyetheramine is less than 5 c.c-mil/100 inch²-atmosphere (02)-day [2.25 x 10⁻⁷ cc.mm/(m².s.kPa)]. Preferably, x is from 0.2 to 1, and most preferably from 0.5 to 1.

Surprisingly, the presence of the A-component in the polyetheramine results in a polymer having thermoplastic character and increased barrier to oxygen in both dry and moist environments. The polyetheramine can be extruded, molded or fabricated by other heat plastifying means to form a variety of barrier articles.

In another aspect, this invention is a process for preparing a polyetheramine as described above, comprising reacting a diglycidyl ether of a dihydric phenol with an amine having only two amine hydrogens in an extruder such that the amine moieties of the amine react with the epoxy moieties of diglycidyl ether to form the polyetheramine.

The polyetheramines employed in this invention are suitably prepared by contacting one or more of the diglycidyl ethers of a dihydric phenol with an amine having two amine hydrogens and represented by AH₂ wherein A is as previously defined under conditions sufficient to cause the amine moieties to react with epoxy moieties to form a polymer backbone having amine linkages, ether linkages and pendant hydroxyl moieties. In the more preferred embodiments of the second aspect of the invention, the polyetheramine also has pendant amido moieties. Conditions conventionally employed in the reaction of diglycidyl ethers with amines to form amine linkages and pendant hydroxyl groups are suitably employed in preparing the resins of this invention. Examples of such suitable conditions are set forth in US Patent 3,317,471. In general, however, the process for preparing the polymers including the copolymers is carried out so that the unreacted epoxy groups in the finished polyether are minimized. By minimizing the epoxy groups in the polyetheramine, the essential thermoplastic character of the polyetheramine can be retained. Preferred conditions for preparing such resins are set forth in the following working examples.

In the preparation of copolymers (i.e., where x in the aforementioned formulae is less than one), a dihydric phenol is employed in addition to the amine. In such copolymerizations while it is possible to subject a mixture of the diglycidyl ether(s), amine(s) and dihydric phenoi(s) to copolymerization conditions, it is sometimes desirable to employ a staged addition procedure wherein the dihydric phenol is added before the amine is introduced or after essentially all of the amine has reacted with the diglycidyl ether. In the preparation of the copolymers wherein the reaction of dihydric phenol with diglycidyl ether is desired, conditions are employed to promote such reactions such as described in U.S. Patent 4,647,648.

The diglycidyl ethers of the dihydric phenols are preferably the diglycidyl ethers of bisphenol ketone (sometimes called bisphenol K), bisphenol sulfone, resorcinol, hydroquinone, 4,4'-isopropylidene bisphenol (bisphenol A), 4,4'-dihydroxydiphenylethylmethane, 3,3'-dihydroxydiphenyldiethylmethane, 3,4'-dihydroxydiphenylmethylpropylmethane, bisphenol, 4,4'-dihydroxydiphenyloxide, 4,4'-dihydroxydiphenylcyanomethane, 4,4'-dihydroxybiphenyl, 4,4'-dihydroxybenzophenone, 4,4'-dihydroxydiphenyl sulfide, 4,4'-dihydroxydiphenyl sulfone, 2,6-dihydroxynaphthalene, 1,4'-dihydroxynaphthalene, catechol, 2,2-bis(4-hydroxyphenyl)-acetamide, 2,2-bis(4-hydroxyphenyl)-ethanol, 2,2-bis(4-hydroxyphenyl)-N-methylacetamide, 2,2-bis(4-hydroxyphenyl)-N,N-dimethylacetamide, 3,5-dihydroxyphenylacetamide, 2,4-dihydroxyphenyl-N-(hydroxyethyl)-acetamide, and other dihydric phenols listed in U.S. Patents 3,395,118; 4,438,254 and 4,480,082 as well as mixtures of one or more of such diglycidyl ethers. Of these preferred diglycidyl ethers, those of bisphenol-A, hydroquinone, and resorcinol are more preferred, with the diglycidyl ether of bisphenol-A being most preferred.

Examples of preferred amines include piperazine and substituted piperazines, e.g., 2-methylamidopiperazine and dimethylpiperazine; substituted anilines, e.g., 4-methylamido-aniline and 4-methoxyaniline 3,4-dimethoxyaniline; alkanol amines, e.g., 2-aminoethanol and 1-aminopropan-2-ol; and aromatic and aliphatic secondary diamines. Of these preferred amines, 2-aminoethanol is most preferred.

Alternatively, the more preferred polyetheramines having pendant alkylamido moieties can be suitably prepared by contacting one or more diglycidyl ethers of a dihydric phenol having an alkylamido substituent with one or more of the aforementioned amines.

For the purposes of this invention, the term "barrier polymer" means that the polymer exhibits an oxygen transmission rate which is less than 5, preferably less than 2, most preferably less than 1, cubic centimetres-mil/100 inch²-atmosphere-day [2.25x10⁻⁷, 9x10⁻⁸, and 4.5x10⁻⁸ cc.mm/(m².s.kPa) respectively].

For the purposes of this invention, "hydrocarbyl" is a monovalent hydrocarbon such as alkyl, cycloalkyl, aralkyl, or aryl and "hydrocarbylene" is a divalent hydrocarbon such as alkylene, cycloalkylene, aralkylene and arylene.

In a further aspect, this invention is an article such as a film, bag, tube or a stand-alone container suitable for packaging oxygen-sensitive materials such as foodstuffs and medicines wherein the article is fabricated from a polyetheramine as hereinbefore described. This article can be in the form of a molded container, an impermeable film or a coating or an interior or exterior layer of a laminate or a coextruded container.

The barrier articles, e.g., containers, films and coatings of this invention are fabricated from the polyetheramines using conventional fabricating techniques for normally solid, thermoplastic polymers such as extrusion, compression molding, injection molding, blow molding and similar fabrication techniques commonly employed to produce such articles.

In an especially preferred embodiment, the polyetheramine is prepared and fabricated into a shaped article by a reactive extrusion process wherein the reactants are fed into and reacted in an extruder using the conditions described in U.S. Patent No. 4,612,156 and is further illustrated in Example 4. In this embodiment, it is understood that one or both of the reactants may be in the form of a prepolymer or a partially advanced resin prior to feeding the reactants into the extruder.

### Illustrative Embodiments

The following examples are given to illustrate the invention and should not be interpreted as limiting it in any way. Unless stated otherwise, all parts and percentages are given by weight.

### Example 1

### Piperazine/Bisphenol A Polymer

To a 100 cm³ resin kettle flask equipped with an overhead stirrer and a nitrogen sparge were added 7.37 g (21.6 mmol) of the diglycidyl ether of bisphenol-A (4,4') which had been washed with methanol, 1.84 g (21.4 mmol) of piperazine recrystallized from diethyl ether and 6 cm³ of the methyl ether of dipropylene glycol (DPG) with stirring over a period of 0.5 hour. The resulting mixture was heated to about 80°C while stirring the mixture thereby producing a temperature exotherm to 140-150°C which was accompanied by a viscosity increase of the reaction mixture. The mixture was maintained at this temperature for one hour during which the mixture was maintained stirrable by the addition of 1cm³ aliquots of DPG. At this point, 0.05 cm³ of diethanol amine was added to cap any residual epoxide end groups. The reaction mixture was then cooled to about 25°C and diluted with about 50cm³ of dimethylformamide (DMF). The polymer product was precipitated by pouring the reaction mixture into excess methanol/water (1:1 by volume), filtered and air dried. The product was redissolved in DMF and reprecipitated in methanol/water, filtered and dried to yield 8.3g (90%) of polymer having the following structural formula: 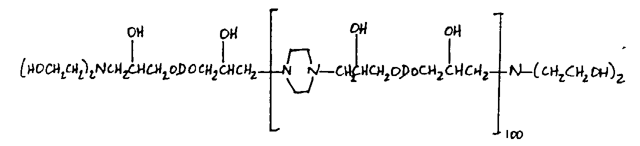 where D = bisphenol-A, i.e. This polymer had a glass transition temperature (Tg) of 100°C and an inherent viscosity of 0.85 dL/g [85cm³/g] in DMF at 25°C. The polymer was tested for barrier to the transmission of oxygen and the results are reported in Table I.

### Example 2

Generally following the procedure of Example 1, additional polyetheramines represented by the structural formula: 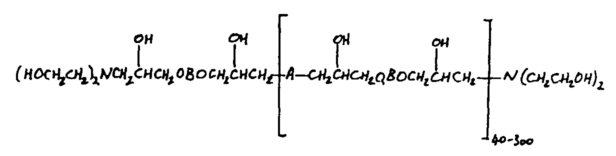 were prepared using different amines and dihydric phenols. These polyetheramines were also tested for Tg, intrinsic viscosity and barrier properties and the results are reported in Table I. In Sample Nos. 1-6, Component A was varied as indicated in the table and Component B was derived from bisphenol-A. In Sample Nos. 7-11, Component A was derived from piperazine and Component B was varied as indicated in the table.

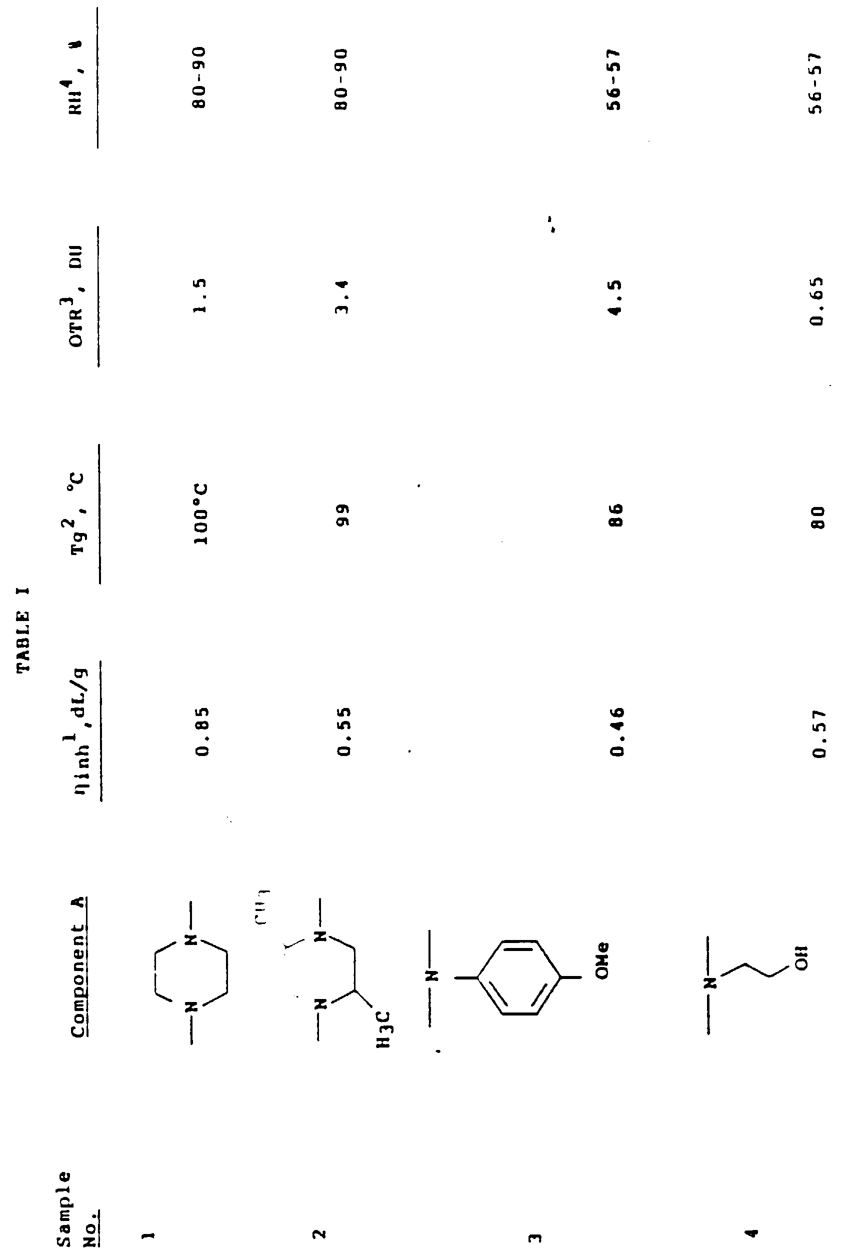

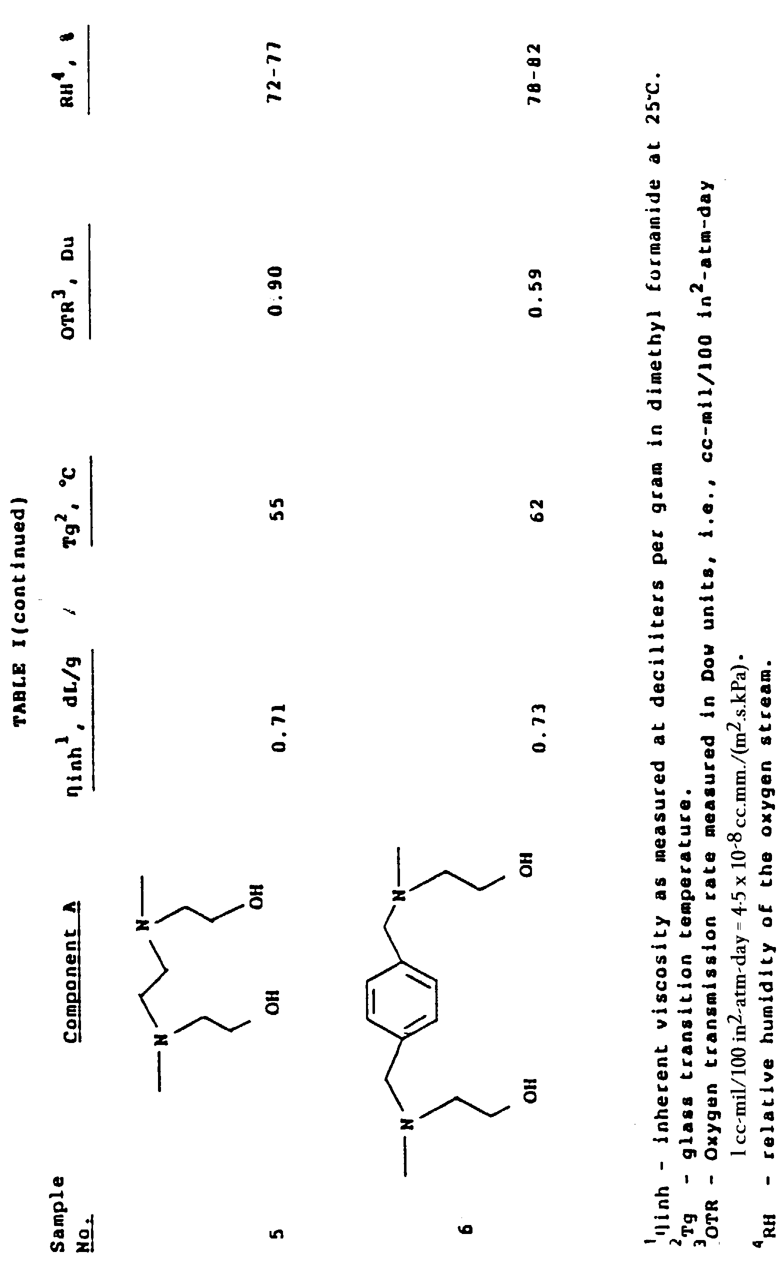

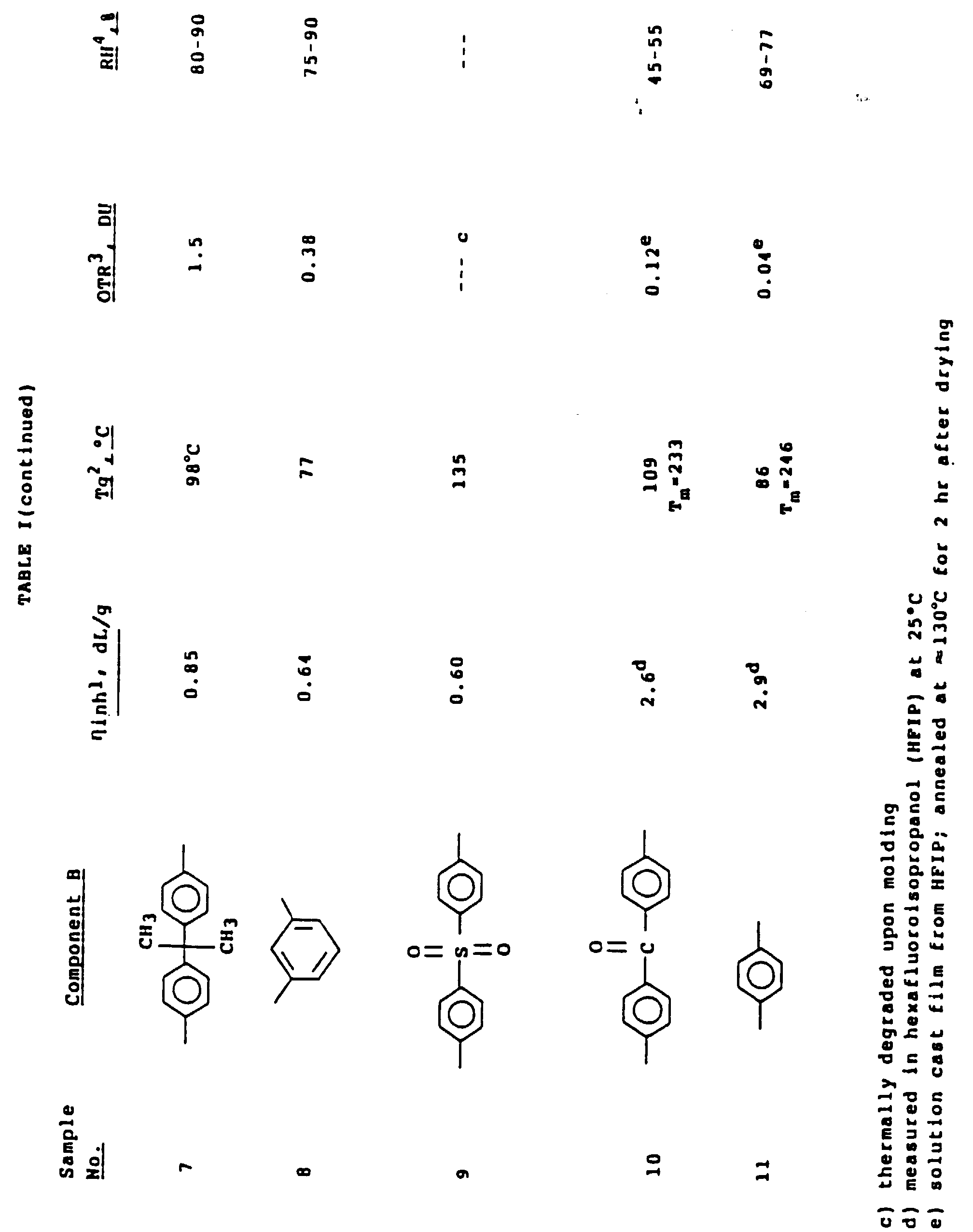

The inclusion of the amine Component (A) produces a surprisingly large reduction in the oxygen permeability of the polymer.

### Example 3 (COMPARATIVE)

Using the apparatus and general procedure of Example 1, a mechanically stirred mixture of ethanolamine (1.099g, 18.0 mmol), resorcinol (1.982 g, 18.0 mmol) and bisphenol A diglycidyl ether (epoxy equivalent weight=12.56 g, 36.7 mmol) in 17 cm³ of the phenyl ether of propylene glycol was heated to 110°C under a nitrogen atmosphere. After the reaction mixture rose exothermically to 140°C and then cooled to 130°C, ethyltriphenylphosphonium acetate (70% in methanol, 5 cm³) was added, causing the temperature to rise exothermically to 167°C. The solution was allowed to cool to 160°C and stirred at that temperature for 45 minutes, after which it was diluted to 75 cm³ with dimethyl formamide. The resulting solution was poured into a 1:1 methanol/water mixture to precipitate a white solid which was collected and stirred in fresh 1:1 methanol/water for 17 hrs. The solid was collected by filtration, allowed to air dry and taken up in 100 cm³ of tetrahydrofuran. The resulting solution was again added to methanol/water to yield 12.79 g of solid which was dried in vacuo at 60°C for 24 hrs. The copolymer is represented by the following formula: 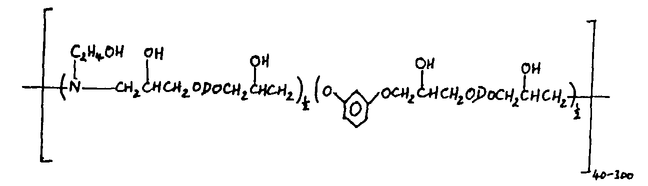 where D = bisphenol-A, i.e. 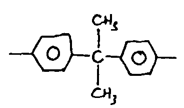 The copolymer was tested as in Example 1 and the results are reported as Sample No. 4 in Table II.

In a manner similar to the foregoing copolymerisation procedure, several additional copolymers were prepared and tested and the results of those tests are reported as Sample Nos. 1-3 in Table II. These polymers are generally represented by the following structure wherein A, B and G are defined in Table II:

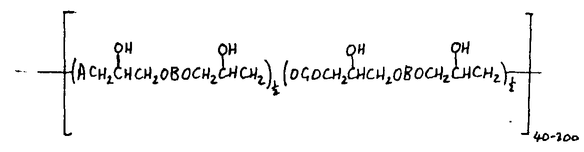

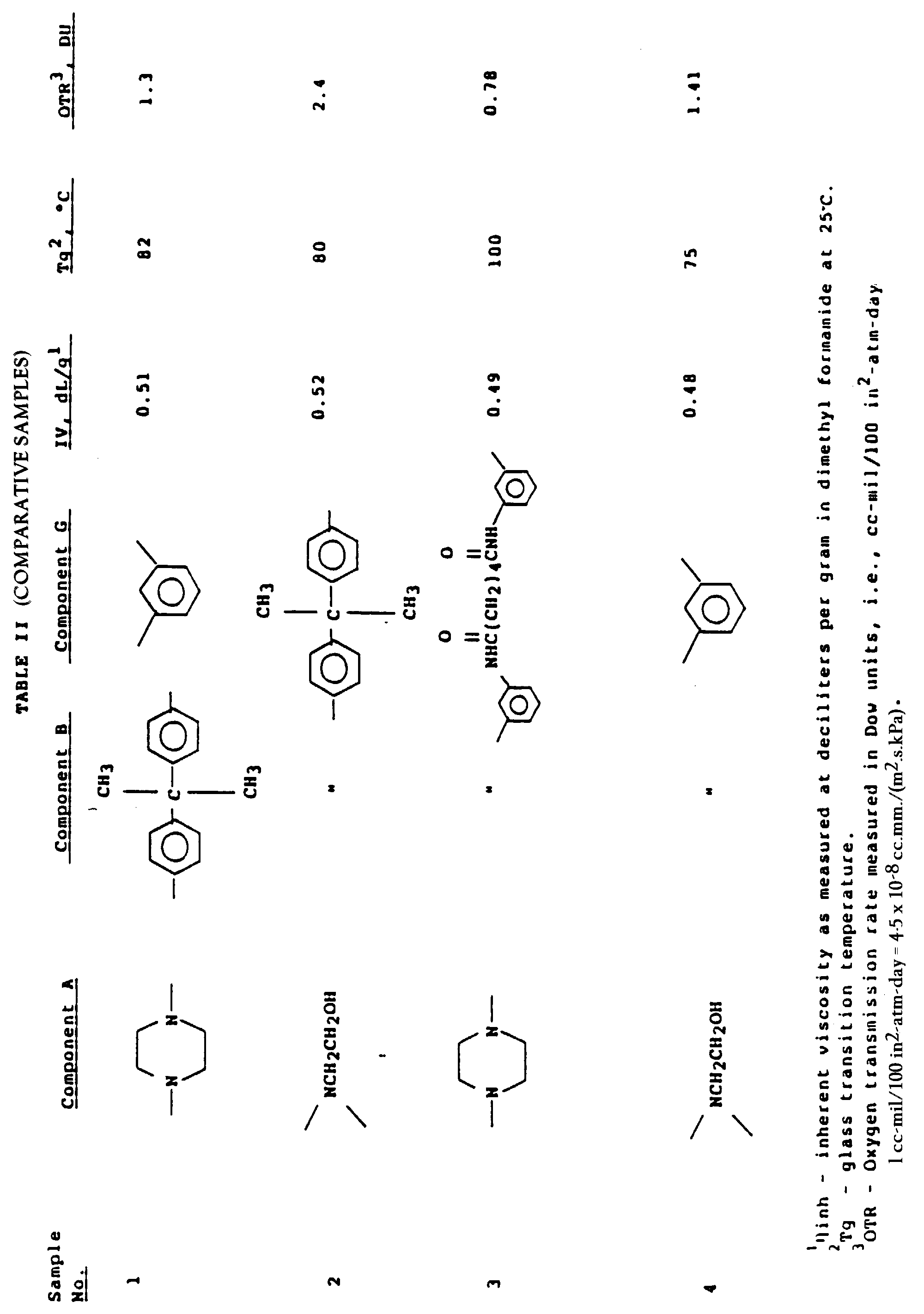

### Example 4

Liquid diglycidyl ether of bisphenoi-A (DER™-332) and monoethanolamine were separately pumped at a 1.0/1.0 mole ratio into the feed zone cf a 30 mm Werner-Pfleiderer twin-screw extruder operating at ≈ 100 rpm. The feed zone was maintained at 65°C. The other zones were heated to 180°, 180°, 185°, 185°, and 180°C (die). Halfway down the barrel of the extruder, diethanolamine was pumped into the molten polymer at a rate of 50 g/hr in order to control molecular weight. The high molecular weight poly(amino ether) strand that exited the die was cooled in a water bath and subsequently chopped into pellets. Polymer produced in this manner demonstrated a less yellow color and better practical toughness than material of similar molecular weight produced in solution as described in Table III:

**TABLE III**

| Polymer Prepared By: | Dynatup Impact Energy¹ (at break, ft-lbs.)* | Yellowness Index² |
|---|---|---|
| solution process | 14 (brittle/ductile) | 18.79 |
| reactive extrusion process | 84 (ductile) | 2.13 |

| | | |
|---|---|---|
| ¹ASTM D3763-86 using drop height of 12 inches [30.48 cm], a drop weight of 138.5 pounds [62.8 kg], temperature of 23°C, a + up diameter of 0.625 inches [1.59 cm] and unsupported sample area of 1.25 inches [3.18 cm] in diameter. | | |
| ²ASTM D1925-70 | | |
| * 1 ft-lbs. = 0.14 m.kg | | |

As evidenced by the data shown in Table III, the reactive extrusion process yields a polymer having unexpectedly higher impact strength and less color than polymer made by the solution process.

## Claims

1. A moldable thermoplastic polyetheramine, having repeating units represented by the formula: 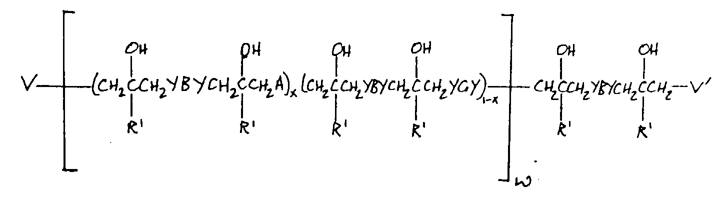 wherein each A independently is piperazine, a substituted piperazine, or a group of the formula: 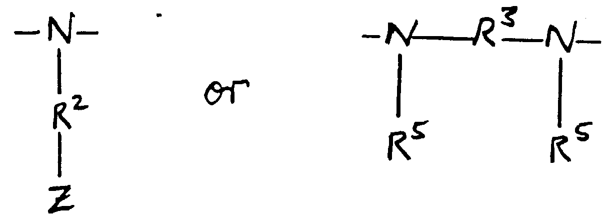 in which
R² is a C₂-C₁₀ hydrocarbylene or substituted hydrocarbylene and Z is a C₁-C₁₀ hydrocarbylamido, or R² is a C₁-C₁₀ alkylene or substituted C₁-C₁₀ alkylene or phenyl or substituted phenyl and Z is alkoxy, hydroxyalkyl or alkylamino, provided that if R² is phenyl or substituted phenyl then hydroxyalkyl is hydroxymethyl;
R³ is a C₁-C₁₀ hydrocarbylene or a substituted hydrocarbylene;
each R⁵ independently is C₁-C₁₀ alkyl or substituted C₁-C₁₀ alkyl or phenyl or substituted phenyl wherein the substituent is hydroxy, hydroxymethyl or alkylamido;
each G and B independently is a divalent aromatic moiety;
each Y independently is divalent oxygen or sulfur;
R¹ is hydrogen, a monovalent hydrocarbon or substituted monovalent hydrocarbon;
each of V and V' is independently is a secondary amine or a tertiary amine;
w is a whole number from 10 to 400; and
x is a number sufficiently high that the oxygen transmission rate of the polyetheramine is less than 5 c.c-mil/100 inch²-atmosphere (O₂)-day
[2.25 x 10⁻⁷ cc.mm/(m².s.kPa)].

2. The polyetheramine of Claim 1, wherein R¹is hydrogen or methyl, R² is alkylene, R⁵ is alkyl or substituted alkyl, each B and G independently is arylene, arylenealkylidenearylene, alkyl- substituted derivatives of arylene or alkyl-substituted derivatives of arylenealkylidenearylene, Y is divalent oxygen, and x is from 0.2 to 1.

3. The polyetheramine of Claim 2, wherein V and V' are independently hydroxyalkylamino or bis(hydroxyalkyl)amino, piperidinyl or piperazinyl, x is from 0.5 to 1.

4. The polyetheramine of any one of the preceding claims, which is the reaction product of a diglycidyl ether of a dihydric phenol and an amine having only two amine hydrogens per molecule.

5. The polyetheramine of Claim 4, wherein the dihydric phenol is bisphenol-A, hydroquinone or resorcinol and the amine is substituted or unsubstituted piperazine, substituted aniline, a substituted alkylamine, an alkanolamine.

6. The polyetheramine of Claim 5, wherein the dihydric phenol is bisphenol-A, and the amine is 2-amino-ethanol.

7. The polyetheramine of Claim 1, which is the copolymeric reaction product of a diglycidyl ether of a dihydric phenol, an amine having only two amine hydrogens per molecule, and a dihydric phenol.

8. The polyetheramine.of Claim 7, which is the reaction product of the diglycidyl ether of bisphenol-A or resorcinol, 2-ethanolamine or piperazine and resorcinol or bisphenol-A.

9. The polyetheramine of any one of the preceding claims, in the form of a barrier container, a barrier film, or a barrier coating.

10. A process for preparing a polyetheramine as claimed in any one of the preceding claims, comprising reacting a diglycidyl ether of a dihydric phenol with an amine having only two amine hydrogens in an extruder such that the amine moieties of the amine react with the epoxy moieties of diglycidyl ether to form the polyetheramine.

11. A process as claimed in Claim 10, further comprising adding a dihydric phenol to the reaction mixture.

12. A method of packaging comprising the step of enclosing an oxygen-sensitive material in a polyetheramine as claimed in any one of Claims 1 to 9, or a polyetheramine prepared by a process as claimed in Claim 10.

## Patentansprüche

1. Verformbares thermoplastisches Polyetheramin, welches sich wiederholende, durch die folgende Formel wiedergegebene Einheiten besitzt: 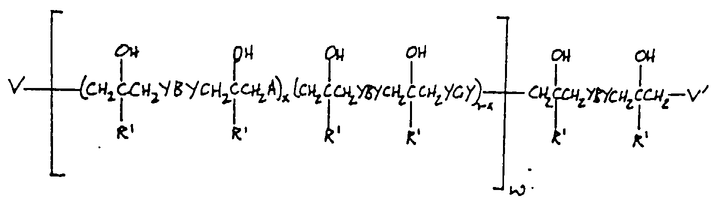 worin jedes A unabhängig voneinander ist: Piperazin, ein substituiertes Piperazin oder eine Gruppe der Formel: 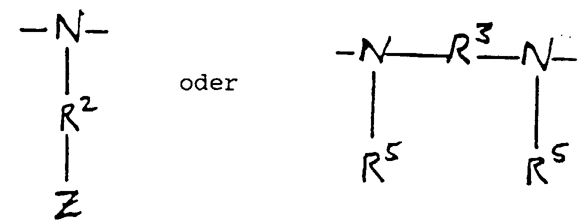 in welcher:
R² ein C₂-C₁₀-Hydrocarbylen oder substituiertes Hydrocarbylen ist und Z ein C₁-C₁₀-Hydrocarbylamido ist oder R² ein C₁-C₁₀-Alkylen oder substituiertes C₁-C₁₀-Alkylen oder Phenyl oder substituiertes Phenyl ist und Z Alkoxy, Hydroxyalkyl oder Alkylamino ist, vorausgesetzt daß, falls R² Phenyl oder substituiertes Phenyl ist, dann Hydroxyalkyl Hydroxymethyl ist,
R³ ein C₁-C₁₀-Hydrocarbylen oder ein substituiertes Hydrocarbylen ist,
jedes R⁵ unabhängig voneinander C₁-C₁₀-Alkyl oder substituiertes C₁-C₁₀-Alkyl oder Phenyl oder substituiertes Phenyl ist, worin der Substituent Hydroxy, Hydroxymethyl oder Alkylamido ist,
jedes G und B unabhängig voneinander eine zweiwertige aromatische Einheit ist,
jedes Y unabhängig voneinander zweiwertiger Sauerstoff oder Schwefel ist,
R¹ Wasserstoff, ein einwertiger Kohlenwasserstoff oder substituierter einwertiger Kohlenwasserstoff ist,
jedes von V und V' unabhängig voneinander ein sekundäres Amin oder ein tertiäres Amin ist,
w eine ganze Zahl von 10 bis 400 ist, und
x eine ausreichend hohe Zahl ist, daß die Sauerstofftransmissionsgeschwindigkeit des Polyetheramins weniger als 5 c.c-mil/100 Zoll²-Atmosphäre (O₂)-Tag [2,25 x 10⁻⁷ cc·mm/(m²·s·kPa)] beträgt.

2. Polyetheramin nach Anspruch 1, worin R¹ Wasserstoff oder Methyl ist, R² Alkylen ist, R⁵ Alkyl oder substituiertes Alkyl ist, jedes B und G unabhängig voneinander Arylen, Arylenalkylidenarylen, alkyl-substituierte Derivate von Arylen oder alkyl-substituierte Derivate von Arylenalkylidenarylen ist, Y zweiwertiger Sauerstoff ist und x von 0,2 bis 1 ist.

3. Polyetheramin nach Anspruch 2, worin V und V' unabhängig voneinander Hydroxyalkylamino oder Bis-(hydroxyalkyl)-amino, Piperidinyl oder Piperazinyl sind, x von 0,5 bis 1 ist.

4. Polyetheramin nach einem der vorhergehenden Ansprüche, welches das Reaktionsprodukt eines Diglycidylethers eines zweiwertigen Phenols und eines Amins, das nur zwei Aminwasserstoffe pro Molekül besitzt, ist.

5. Polyetheramin nach Anspruch 4, worin das zweiwertige Phenol Bisphenol-A, Hydrochinon oder Resorcin ist und das Amin substituiertes oder nicht-substituiertes Piperazin, substituiertes Anilin, ein substituiertes Alkylamin, ein Alkanolamin ist.

6. Polyetheramin nach Anspruch 5, worin das zweiwertige Phenol Bisphenol-A ist und das Amin 2-Aminoethanol ist.

7. Polyetheramin nach Anspruch 1, welches das copolymere Reaktionsprodukt eines Diglycidylethers eines zweiwertigen Phenols, eines Amins, das nur zwei Aminwasserstoffe pro Molekül besitzt, und eines zweiwertigen Phenols ist.

8. Polyetheramin nach Anspruch 7, welches das Reaktionsprodukt des Diglycidylethers von Bisphenol-A oder Resorcin, 2-Ethanolamin oder Piperazin und Resorcin oder Bisphenol-A ist.

9. Polyetheramin nach einem der vorhergehenden Ansprüche in Form eines Sperrschichtbehälters, einer Sperrschichtfolie oder einer Sperrschichtbeschichtung.

10. Verfahren zur Herstellung eines Polyetheramins wie in einem der vorhergehenden Ansprüche beansprucht, umfassend die Umsetzung eines Diglycidylethers eines zweiwertigen Phenols mit einem Amin, das nur zwei Aminwasserstoffe besitzt, in einem Extruder derart, daß die Amineinheiten des Amins mit den Epoxyeinheiten des Diglycidylethers zur Bildung des Polyetheramins reagieren.

11. Verfahren nach Anspruch 10, weiter umfassend die Zugabe eines zweiwertigen Phenols zu dem Reaktionsgemisch.

12. Verfahren zum Verpacken, umfassend die Stufe des Einschließens eines sauerstoffempfindlichen Materials in ein Polyetheramin, wie in einem der Ansprüche 1 bis 9 beansprucht, oder ein Polyetheramin, hergestellt nach einem Verfahren, wie in Anspruch 10 beansprucht.

## Revendications

1. Polyétheramine thermoplastique moulable, présentant des motifs répétés répondant à la formule : 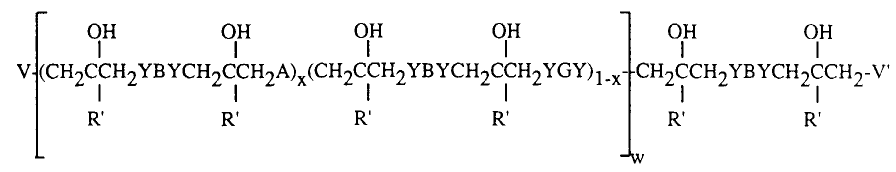 dans laquelle chaque A représente indépendamment la pipérazine, une pipérazine substituée ou un groupe répondant à la formule : 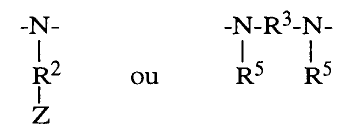 dans lesquelles R² représente un groupe hydrocarbylène en C₂₋₁₀ substitué ou non, et Z représente un groupe hydrocarbylamido en C₁₋₁₀, ou R² représente un groupe alkylène en C₁₋₁₀ substitué ou non, ou un groupe phényle substitué ou non, et Z représente un groupe alcoxy, hydroxyalkyle ou alkylamino, à condition que si R² représente un groupe phényle substitué ou non, alors le groupe hydroxyalkyle est un groupe hydroxyméthyle ;
R³ représente un groupe hydrocarbylène en C₁₋₁₀ substitué ou non ;
chaque R⁵ représente indépendamment un groupe alkyle en C₁₋₁₀ substitué ou non, ou un groupe phényle substitué ou non dans lequel le substituant est un groupe hydroxy, hydroxyméthyle ou alkylamido ;
chaque G et chaque B représentent indépendamment un fragment aromatique divalent ;
chaque Y représente indépendamment un atome d'oxygène ou de soufre divalent ;
R¹ représente un atome d'hydrogène, un groupe hydrocarboné monovalent substitué ou non ;
chacun des V et V' représente indépendamment une amine secondaire ou une amine tertiaire ;
w est un nombre entier allant de 10 à 400 ; et
x est un nombre suffisamment élevé pour que la vitesse de transmission de l'oxygène à travers la polyétheramine soit inférieure à 5 cc-mil/100 pouce²-atmosphère (O₂)-jour [2,25 x 10⁻⁷ cm³.mm(m².s.kPa)].

2. Polyétheramine conforme à la revendication 1, dans laquelle R¹ représente un atome d'hydrogène ou un groupe méthyle, R² représente un groupe alkylène, R⁵ représente un groupe alkyle substitué ou non, chaque B et chaque G représentent indépendamment un groupe arylène, arylènealkylidènearylène, des dérivés d'arylène à substituant alkyle, ou des dérivés d'arylènealkylidènearylène à substituant alkyle, Y représente un atome d'oxygène divalent et x vaut de 0,2 à 1.

3. Polyétheramine conforme à la revendication 2, dans laquelle V et V' représentent indépendamment un groupe hydroxyalkylamino ou bis(hydoxyalkyl)amino, pipéridinyle ou pipérazinyle, x vaut de 0,5 à 1.

4. Polyétheramine conforme à l'une quelconque des précédentes revendications, qui est le produit réactionnel d'un éther diglycidylique d'un phénol dihydrique et d'une amine présentant seulement deux atomes d'hydrogène d'amine par molécule.

5. Polyétheramine conforme à la revendication 4, dans laquelle le phénol dihydrique est le bisphénol A, l'hydroquinone ou le résorcinol et l'amine est la pipérazine substituée ou non, l'aniline substituée, une alkylamine substituée ou une alcanolamine.

6. Polyétheramine conforme à la revendication 5, dans laquelle le phénol dihydrique est le bisphénol A et l'amine est le 2-aminoéthanol.

7. Polyétheramine conforme à la revendication 1, qui est le produit réactionnel copolymérique d'un éther diglycidylique d'un phénol dihydrique, d'une amine présentant seulement deux atomes d'hydrogène d'amine par molécule et d'un phénol dihydrique.

8. Polyétheramine conforme à la revendication 7, qui est le produit réactionnel de l'éther diglycidylique du bisphénol A ou du résorcinol, de la 2-éthanolamine ou de la pipérazine et du résorcinol ou du bisphénol A.

9. Polyétheramine conforme à l'une quelconque des précédentes revendications, sous la forme d'un récipient barrière, d'un film barrière ou d'un revêtement barrière.

10. Procédé pour préparer une polyétheramine conforme à l'une quelconque des précédentes revendications, comprenant la réaction d'un éther diglycidylique d'un phénol dihydrique avec une amine présentant seulement deux atomes d'hydrogène d'amine dans une extrudeuse, de telle sorte que les fragments de type amine de l'amine réagissent avec les fragments époxy de l'éther diglycidylique pour former la polyétheramine.

11. Procédé conforme à la revendication 10, comprenant en outre l'addition d'un phénol dihydrique au mélange réactionnel.

12. Procédé d'emballage comprenant l'étape d'enfermer un matériau sensible à l'oxygène dans une polyétheramine conforme à l'une quelconque des revendications 1 à 9, ou dans une polyétheramine préparée par un procédé conforme à la revendication 10.
